# EUROPEAN PATENT APPLICATION

(11) **EP 4 838 443 A1**
(43) Date of publication of application: **11.11.2026**
(21) Application number: 25179768.4
(22) Date of filing: 30.05.2025
(51) Int. Cl.: G06Q 20/12, G06Q 20/14, G06Q 20/38, G07F 17/24

(54) **SYSTEM AND METHOD FOR AUTONOMOUS ACTIVATION AND TERMINATION OF DIGITAL PARKING SESSIONS BASED ON MULTI-SOURCE CONTEXTUAL DATA**

(30) Priority: 09.05.2025 NL NL
(71) Applicant: Tedja, Michael, 2285 VV Den Haag (NL)
(72) Inventor: Tedja, Michael, 2285 VV Den Haag (NL)

(57) **Abstract**

A computer-implemented system for autonomous control of digital parking sessions is disclosed. The system evaluates at least two independent contextual inputs - such as geolocation, vehicle telemetry, wireless proximity, and scheduling data - to compute a weighted confidence score. When a predefined threshold is exceeded and no exclusion applies, a binary instruction is generated to start or stop a session. The instruction is securely transmitted and recorded in a tamper-evident, cryptographically verifiable audit log. Fallback mechanisms are technically and logically segregated from the core control logic, activated only under explicitly defined exception conditions. All session transactions, fallback events, and decision metadata are independently recorded for legal verification and compliance enforcement. The invention enables user-independent, infrastructure-agnostic session execution across mobile, embedded, and cloud platforms.

## Description

### 1. Technical Field

The invention pertains to the field of intelligent transportation systems, and more specifically to a computer-implemented system for the autonomous initiation and termination of digital parking sessions.

A digital parking session, as defined herein, is a time-bound, location-validated, digitally authenticated registration and billing event that is recognized by public authorities or service providers. Such a session is initiated and terminated by a control engine without human interaction, through secure interfaces with third-party parking or enforcement systems.

The system operates by continuously processing at least two independent, real-time contextual data inputs, including but not limited to geolocation signals, scheduling information, vehicle telemetry, and wireless proximity states. When the evaluated combination of inputs exceeds a predefined confidence threshold, and no exclusion condition is triggered, the system issues a binary control instruction to initiate or terminate the parking session.

All transactions are transmitted in authenticated digital format and are recorded in a cryptographically verifiable log. The control logic and data flows are executed without user confirmation, under normal conditions. Any fallback or override mechanisms, if present, are technically segregated from the autonomous control logic and are only activated under exceptional, explicitly defined scenarios. These do not interfere with the execution of active transactions and are auditable and traceable.

The system architecture supports deployment across mobile applications, in-vehicle computing platforms, and cloud environments. Its protocol-flexible interfaces ensure interoperability with diverse infrastructure and jurisdictional requirements.

The technical effect of the invention lies in enabling fully autonomous and verifiable control over parking session transactions, reducing dependency on user input, increasing accuracy through multi-source validation, and providing enforceable digital records - features not achievable with conventional single-trigger or user-dependent systems.

### 2. Background Art

This section outlines the state of the art in digital parking systems, identifies known technical limitations in existing approaches, and highlights how the present invention differs in terms of autonomy, input handling, and transaction verification.

### 2.1 General context

Over the past decade, numerous digital parking systems have emerged to improve the user experience of initiating and paying for parking sessions. These include mobile apps, geofencing triggers, license plate recognition (LPR) systems, and infrastructure-based parking sensors. Many of these solutions rely on real-time GPS data or calendar integration to notify users or to enable manual session control. While useful, they generally depend on user interaction and lack autonomous execution capabilities.

### 2.2 Limitations of existing systems

Current systems typically require user input to initiate or confirm parking sessions. Geofencing triggers, for example, may suggest activation based on location but still need user confirmation. Others use single-sensor presence detection-such as Bluetooth or cellular signals-which can be unreliable due to signal drift, device variance, or environmental interference. These systems do not fuse multiple inputs nor apply threshold-based logic, making them vulnerable to false positives or missed activations.

More critically, existing implementations often fail to produce a digitally signed, verifiable transaction record. They lack integration with enforcement or billing systems that allow for regulatory compliance and auditability. As a result, users remain responsible for initiating and managing sessions, and the systems cannot provide technical proof of parking status or timing. This limits legal enforceability, reduces user independence, and exposes stakeholders to disputes.

### 2.3 Need for the invention

There is a clear need for a fully autonomous, computer-implemented parking session management system that can analyze multiple real-time data sources, apply dynamic confidence thresholds, and execute authenticated parking transactions without user involvement. Such a system must isolate fallback logic from the primary control path and generate a cryptographically secure audit trail of all decisions and actions. Interoperability with third-party enforcement, billing, and deployment platforms is essential for scalable adoption across urban, commercial, and fleet environments.

### 2.4 Related prior art and differentiation

WO2019/045068A1 (ParkNow, 2018): Describes a location-based mobile app that suggests parking zones and prompts users to confirm session initiation. It lacks autonomous control logic and does not support multi-input decision-making or audit trail generation. This contrasts with the present invention, which executes fully automated transactions based on fused input analysis.

EP2702068B1 (EasyPark AB, 2012): Discloses user-initiated parking via mobile interface with optional timers or geofencing. All control remains user-driven; no automated control module is present. The invention presented here eliminates user dependency and replaces it with system-evaluated, threshold-based logic.

US20170255642A1 (Bosch GmbH, 2016): Focuses on vehicle-integrated detection based on deceleration or gear state. The system does not transmit transactions to external entities and lacks contextual input fusion. In contrast, the present invention integrates external APIs, multiple inputs, and cryptographically verifiable outputs.

US20180087265A1 (INRIX Inc., 2017): Offers predictive parking recommendations using historical or traffic data. The system does not initiate or terminate sessions autonomously and lacks binding, verifiable control instructions.

US20160078794A1 (Valeo, 2015): Detects vehicle parking transitions but does not interact with third-party platforms or issue executable transactions. Input evaluation and decision isolation are absent.

EP3519477A1 (Huawei Technologies, 2018): Uses GPS-based location detection and requires user confirmation. It lacks a decision engine capable of multi-input fusion or fallback segregation.

These prior systems, filed between 2012 and 2018, reflect limitations such as reliance on single inputs, user interaction, and absence of verified control logic. The present invention addresses these gaps by delivering a self-governing parking session engine that uses input fusion, threshold evaluation, and cryptographically authenticated transaction logging to achieve legally enforceable autonomy.

None of the cited systems discloses or enables the combined use of autonomous multi-input threshold logic, digitally authenticated transaction control, and isolated fallback handling as implemented in the present invention.

### 3. Summary of the Invention

The invention provides a computer-implemented system and method for the autonomous initiation and termination of digital parking sessions based on the evaluation of multiple real-time contextual data sources.

Unlike prior systems that rely on user input, single-sensor triggers, or predictive notifications, the invention operates without human intervention. It comprises a decision logic module that processes inputs such as geolocation signals, scheduling data, vehicle telemetry, and wireless proximity to determine whether a parking session should be initiated or terminated. Each input is evaluated for reliability, and a combined confidence score is calculated against a predefined execution threshold.

If the threshold is met and no exclusion rules are active, the system generates a binary session control instruction (start or stop). This instruction is transmitted via a secure interface to an external enforcement or billing system and is recorded in a digitally signed, cryptographically verifiable transaction log.

Fallback and override mechanisms are technically isolated from the main control path and can only be activated under exceptional, predefined conditions. These mechanisms do not override validated transactions and serve only to support operational continuity under degraded or ambiguous input states.

The system architecture is designed for deployment in mobile applications, embedded vehicle systems, and cloud-based control platforms. Interoperability is achieved via standardized API endpoints and message formats compatible with heterogeneous infrastructure and regulatory frameworks.

The technical effect of the invention is to provide a fully autonomous, user-independent, and verifiable parking session control system that enhances accuracy, legal enforceability, and operational scalability compared to existing user-driven or sensor-limited implementations. The combination of confidence-based threshold scoring, multi-source contextual input, and exclusion rule evaluation produces a technical effect in the form of increased decision reliability and reduced false activations under varying signal conditions. In contrast to prior systems that rely on single-sensor triggers or static rules, the present invention enables autonomous execution with measurable system-level accuracy and verifiability.

This effect is particularly relevant in real-world environments where input availability fluctuates and user interaction cannot be relied upon.

### 4. Technical Problem

The technical problem addressed by the present invention is the lack of a reliable, autonomous, and verifiably secure mechanism for managing digital parking sessions based on contextual data evaluation, without human intervention.

Existing systems either depend on user confirmation, rely on single-point triggers, or fail to produce authenticated, machine-verifiable control outputs. These limitations result in missed activations, false positives, and a lack of enforceable transaction records. Furthermore, fallback and override mechanisms-if present-are typically entangled with the main control logic, reducing system reliability and accountability.

Another aspect of the technical problem is the absence of a unified execution model that supports cross-platform interoperability and real-time API-based integration with third-party enforcement or billing systems.

The invention solves this by introducing a control architecture that fuses multiple real-time input signals, evaluates confidence thresholds, and issues digitally authenticated session instructions via a secure interface, all without user input. Fallback handling is kept technically isolated and auditable, ensuring operational integrity. The solution is provided through the features described in claim 1 and its dependent claims.

The technical problem addressed by the invention is how to autonomously control digital parking sessions under real-world variability, while ensuring verifiability, legal enforceability, and user independence. The invention solves this by introducing a threshold-based, multi-input scoring mechanism with fallback isolation and cryptographically signed transaction execution.

### 5. Detailed Description of Embodiments

In the following, exemplary embodiments of the invention are described in detail. These embodiments are provided to illustrate various technical components, data flow architectures, decision logic mechanisms, and integration scenarios. The embodiments do not limit the scope of the claims but serve to demonstrate possible implementations of the invention.

Where applicable, variations across mobile platforms, embedded in-vehicle systems, and cloud-based infrastructures are included to reflect deployment flexibility. The embodiments also highlight system behavior under standard and exceptional operating conditions, and how the architecture supports autonomous control, interoperability, and verifiability.

These descriptions are provided for illustrative purposes only. Other configurations, adaptations, or equivalent implementations that achieve the same technical effect are considered to fall within the scope of the present invention.

### 5.1 System Overview

In one embodiment, the invention comprises a computer-implemented system designed to autonomously manage the initiation and termination of digital parking sessions. The system operates through a control engine that processes multiple real-time contextual inputs to determine whether a parking session should be initiated or terminated, without requiring manual user confirmation under standard operating conditions.

The architecture includes the following components:
Data Input Modules - responsible for capturing relevant contextual data, including geolocation, scheduling metadata, vehicle state indicators, and wireless connectivity signals. These inputs provide the foundational information for autonomous session decision-making.

Decision Logic Module - evaluates the reliability and contextual relevance of the input signals using predefined or dynamically adjusted confidence thresholds. This component ensures consistent, data-driven control based on input fusion rather than single-source triggers.

Transaction Execution Unit - generates and transmits digitally authenticated parking session instructions via standardized APIs to external enforcement or billing systems. This enables legal enforceability and platform-level interoperability.

Secure Logging and Audit Subsystem - stores session data, evaluation outcomes, and fallback activations in a tamper-resistant and cryptographically verifiable format. This supports system accountability, post-event analysis, and regulatory compliance.

Fallback Control Module (optional) - technically segregated from the primary session control logic and activated only under explicitly defined exception conditions such as sensor ambiguity or recovery scenarios. This preserves core system autonomy while allowing resilient operation in edge cases.

The system may be deployed on mobile platforms, in embedded vehicle environments, or within distributed cloud architectures. It supports full interoperability with heterogeneous parking control infrastructures via configurable APIs and platform-agnostic interface protocols. Use cases include individual deployments, fleet-based coordination, and third-party platform integration.

As a non-limiting example, when a vehicle stops within a recognized parking zone, Bluetooth presence is confirmed, and no exclusion is detected from calendar or whitelist inputs, the system autonomously initiates a session. The action is recorded with cryptographic verification and does not require user intervention. Alternative configurations and logical decompositions that achieve the same technical effect are considered within the scope of the invention.

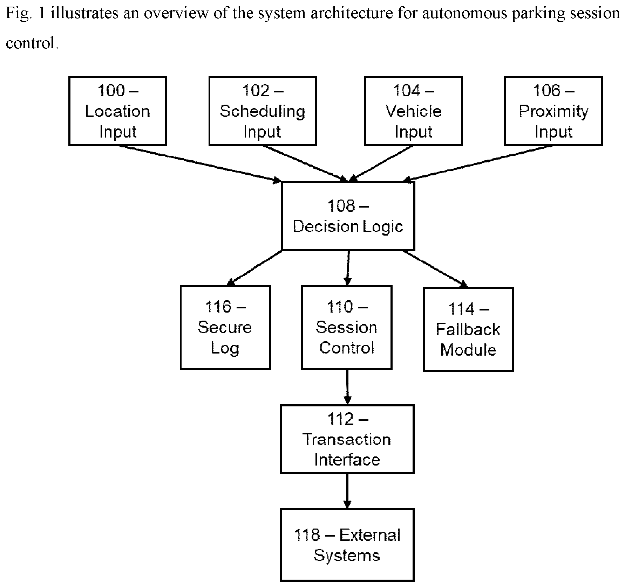

The elements and functions described herein correspond directly to the features of Claim 1. In particular, Figures 1-4 illustrate the contextual input modules, decision logic, control flow, and transaction execution described in the claim. Sections 5.2 through 5.5 provide the technical support for evaluating input reliability, computing confidence scores, issuing control instructions, and handling fallback conditions. This description is intended to support the legal scope of Claim 1 in detail.

### 5.2 Input Sources

In one embodiment, the system relies on multiple, independent input sources that provide real-time contextual data for evaluating whether a digital parking session should be initiated or terminated. Each input is processed as a discrete signal with associated metadata and is evaluated for reliability and relevance before being incorporated into the decision logic.

The following categories of input sources are used:

### Geolocation Data

Acquired via GPS, GNSS, or hybrid positioning systems from mobile or embedded vehicle modules. This input determines whether the vehicle is physically located within a recognized parking zone. Precision thresholds may be dynamically adjusted based on signal quality and environmental conditions. The technical effect is to establish spatial context with sufficient granularity to support zone-level compliance.

### Temporal Scheduling Information

Sourced from the user's device calendar, task manager, or enterprise scheduling platform. This input provides exception states, such as known permissions or scheduled events, and prevents session activation during expected or planned stops. The technical effect is to incorporate intent-awareness into the decision framework.

### Vehicle Telemetry

Includes signals such as ignition status, gear position, engine on/off, and motion sensors. These are retrieved via OBD, CAN bus systems, or vehicle APIs and serve to confirm physical transitions into or out of stationary states. This input strengthens temporal accuracy and ensures state verification beyond geospatial analysis.

### Wireless Connectivity States

Includes Bluetooth or Wi-Fi pairing with a recognized vehicle key, device, or system. These signals validate presence within proximity zones where geolocation may be ambiguous or degraded. The system interprets signal disconnection as a potential exit from the parking zone. This input enhances detection continuity in GPS-compromised environments.

Each input source is assigned a dynamic reliability score based on type, recent signal behavior, and correlation with other active sources. The system requires that at least two independent input sources exceed a predefined confidence threshold before generating a session control instruction. This multi-source evaluation reduces false positives and negatives and improves decision robustness under real-world operating conditions.

If fewer than two sources are active or if their combined confidence remains below threshold, no session control instruction is issued, and the system remains in an inactive standby state.

The combined use of these input categories enables autonomous, verifiable decision-making that exceeds the capabilities of existing single-sensor or user-driven systems.

### 5.3 Decision Logic and Threshold Evaluation

In one embodiment, the system's decision logic module serves as the core processing unit responsible for evaluating whether the conditions are met to initiate or terminate a digital parking session. The module receives normalized input signals from the sources described in Section 5.2 and performs weighted analysis based on signal reliability, type, and contextual alignment.

Each signal is assigned a dynamic confidence value reflecting its technical trustworthiness under current operating conditions. For instance, a GPS signal with recent drift may be weighted lower than a verified ignition status reported from an authenticated vehicle interface.

The decision logic uses a configurable weighting model to compute an aggregate decision score.

A binary parking session control instruction-start or stop-is generated only when all of the following conditions are met:
1. At least two independent input signals are active;
2. The aggregate decision score equals or exceeds a predefined execution threshold;
3. No exclusion condition is valid, such as calendar-based suppression, geofenced whitelist match, or user-defined override rule.

Unlike systems based on fixed location triggers or passive user prompts, the present decision logic actively evaluates contextual data from multiple sources using real-time confidence metrics.

The output is a binary control instruction that is digitally verifiable and timestamp-bound to the evaluated input set. This instruction is transmitted to the transaction execution unit and may be independently validated post-decision by enforcement or audit systems to confirm legal and technical compliance.

Each decision event is logged with timestamp, contributing signal types, assigned confidence scores, and decision logic versioning. This supports auditability, post-event review, and adaptive model refinement.

The decision framework is modular and deployment-agnostic, enabling implementation across cloud platforms, vehicle environments, or distributed edge nodes.

The technical effect of this architecture is to achieve precise, autonomous session control under diverse conditions, reducing false activations and eliminating user dependency. This approach distinguishes itself from prior systems by eliminating reliance on static rules, single-sensor triggers, or user interaction.

### Practical Technical Implementation and Hardware-Bound Decision Execution

The decision logic described in this system is not implemented as an abstract mathematical model or generalized algorithm. Instead, it operates in real time on physical devices (e.g., in-vehicle computers, mobile phones, edge gateways) and directly affects hardware-triggered outputs-namely the secure initiation or termination of parking transactions through certified API interfaces.

These actions include the generation of cryptographically signed session commands, hardware-protected logging of decisions, and the transmission of verifiable control instructions over authenticated, encrypted channels.

By binding the decision outcome to physical session enforcement and tamper-proof system behavior, the invention demonstrably improves the functioning of the underlying computing device and cannot be executed without embedded hardware elements.

This implementation thus satisfies the technical effect and hardware linkage criteria required for patent-eligibility under U.S. law.

### 5.4 Session Execution and Transaction

In one embodiment, once the decision logic module determines that a parking session should be initiated or terminated, the system generates a binary control instruction and forwards it to the transaction execution unit. This unit is responsible for constructing, dispatching, and logging the transaction that formalizes the parking session event.

Each transaction includes the following data elements:
1. Session type - specifies whether the action is an initiation or termination event, enabling external systems to interpret the context of the control instruction.
2. Timestamp - the exact system time at which the decision was finalized, used to establish session duration and temporal validity.
3. Validated location - a geographic identifier derived from input signal fusion, ensuring that the session occurred within an authorized zone.
4. Unique session ID - a non-reusable identifier, cryptographically bound to the transaction content to prevent duplication or tampering.
5. Authentication payload - such as a digital signature or encrypted token issued by the system's cryptographic module, establishing the authenticity and integrity of the message.

The completed transaction is transmitted via a standardized interface to an external parking platform, enforcement authority, or billing provider. This may include RESTful API calls, asynchronous message queues, or direct database operations, depending on the deployment environment.

For example, the transaction may be encoded in JSON format as follows:

```
 {
 "session_id": "abc123xyz",
 "action": "start",
 "timestamp": 1710000000,
 "location_id": "ZONE456",
 "signature": "eyJhbGciOiJIUzIlNiIsInR5cCI6IkpXVCJ9..."
 }
```

All outbound transactions are also recorded in an immutable audit trail. The log includes the full transaction payload as well as the underlying decision context-such as contributing input signals, their confidence values, and the system version used. This allows for end-to-end traceability in compliance checks, dispute resolution, and post-event analysis.

Optionally, the transaction execution unit may include redundancy mechanisms such as scheduled retries or alternate communication paths in case the primary endpoint is unavailable. In these cases, the transaction is marked accordingly but retained securely until confirmed delivery is achieved.

The technical effect of this architecture is to enable autonomous, verifiable, and legally enforceable session registration using machine-readable protocols and cryptographically signed control instructions. This exceeds the capabilities of conventional systems that rely on internal state marking or non-validated user actions.

### 5.5 Fallback and Override Handling

In one embodiment, the system includes optional fallback and manual override mechanisms designed to address exceptional scenarios such as incomplete data, signal degradation, or user-defined exceptions. These mechanisms are technically and logically segregated from the autonomous session control module and are not permitted to interfere with normal control operations.

Fallback behavior may be triggered under any of the following conditions:
1 . The minimum number of required input sources is not available;
2. The aggregate decision score remains below the activation threshold;
3. Conflicting or ambiguous input signals prevent the system from producing a stable binary outcome;
4. A predefined timeout period elapses without sufficient input validation.

In such cases, the system may default to a passive standby state, prompt the user for manual intervention, or flag the session for delayed processing. Any such action is clearly marked in the audit log and is never classified as an autonomous decision.

Manual override configurations may be predefined by the user or administrator and may include persistent exceptions (e.g., home or office zones), temporary suspension windows, or policy-based control limits (e.g., weekend-only automation). These overrides function as predecision filters and do not participate in the live decision loop. Once an autonomous session transaction is validated and dispatched, it cannot be suppressed, reversed, or altered by any override mechanism.

All fallback and override events are cryptographically logged and fully traceable. Each deviation from the standard execution path is recorded with a timestamp, trigger cause, and relevant user or system context to enable transparency, regulatory compliance, and audit integrity.

The technical effect of this fallback architecture is to preserve full system autonomy under standard conditions while enabling safe interruption paths under exception scenarios. This ensures that core decision integrity is maintained, and all deviations remain externally verifiable.

### 5.6 Deployment Variants

In one embodiment, the system is designed to support flexible deployment across diverse technical environments, enabling adaptation to various operational contexts without modifying the autonomous session control logic. The following deployment variants are supported:

### Mobile Application Deployment

The system may be embedded in a mobile application operating on a user's smartphone or tablet. Local sensors such as GPS, calendar data, and wireless proximity signals are processed directly on the device. Session decisions may occur locally or be relayed to a backend cloud service for centralized coordination and auditable logging. This deployment offers mobility and fast user-device integration with minimal infrastructure.

### In-Vehicle Embedded System

The system may be integrated within a vehicle's onboard computing environment, including infotainment platforms, telematics units, or standalone IoT modules. This deployment variant provides direct access to high-fidelity vehicle telemetry, such as ignition and motion data, and reduces reliance on wireless connectivity. The technical effect is increased signal precision and real-time responsiveness.

### Cloud-Based or Platform-Centric Architecture

For fleet and enterprise use cases, the system may run as a distributed cloud service. Contextual data is received from vehicle APIs, mobile agents, or fleet management platforms. Centralized decision logic enables synchronized parking session control across multiple vehicles or user groups, with enhanced administrative policy enforcement.

### Hybrid Architecture

A hybrid deployment splits responsibilities between edge devices and the cloud. Signal acquisition and filtering occur locally, while the decision logic and transaction execution are centralized. This model optimizes latency, enforces privacy at the source, and ensures consistent rule application across all devices.

Across all variants, the core system architecture remains unchanged: multi-source input fusion, threshold-based decision logic, binary control instruction, and cryptographically verifiable logging. The interoperability layer uses standardized APIs and transport protocols for integration with external platforms such as enforcement, billing, and regulatory authorities.

Such deployment-specific configurations are parameterized and do not alter the core technical logic or the claimed technical effect. The system is architected to be forward-compatible with future deployment models and evolving infrastructure, including vehicle-to-cloud frameworks and decentralized mobility ecosystems.

### 5.7 Enhanced OEM Telemetry Integration

In one embodiment, the system is configured to require secure, authenticated access to proprietary vehicle telemetry through OEM-defined communication interfaces. The session control module is only permitted to execute if all of the following conditions are met:
The system performs a VIN-based key exchange that cryptographically binds the requesting software instance to a specific vehicle identity, using elliptic curve cryptography (e.g., ECDSA-P256) to prevent unauthorized reuse of session credentials.

Proximity signal thresholds-such as Bluetooth RSSI or Wi-Fi handshake range-are calibrated based on vehicle category (e.g., compact, SUV, van) and are stored in a central key infrastructure. These thresholds are validated using manufacturer-certified device profiles to ensure environment-specific accuracy.

A configuration set required for executing the autonomous logic is retrieved from a cryptographically protected repository, where access is restricted via key-controlled token validation and cryptographic audit logging.

Should any of the above dependencies fail, the system halts execution and generates a tamper-evident failure log. This ensures that no unverified, spoofed, or unauthorized modules can simulate autonomous session logic. The technical effect of this implementation is to enforce patent protection through embedded control mechanisms, rather than relying solely on legal detection of unauthorized replication.

### Alternative Implementation Path without OEM-Level Telemetry Access

In jurisdictions or deployment environments where access to OEM-secured vehicle telemetry interfaces is restricted, the system may alternatively rely on third-party or aftermarket modules-such as OBD-II dongles, mobile telematics SDKs, or certified CAN interceptors-to retrieve critical motion and ignition data.

These components are configured to replicate the functional signals described in Claim 1, without requiring direct firmware-level authentication or OEM-issued API tokens.

While the security and precision of such fallback methods may differ from native OEM integrations, the system compensates by applying stricter validation thresholds, signal confidence penalties, or enhanced multi-source correlation (as described in Section 5.2).

This alternative implementation ensures that the autonomous session control logic remains functional in legally or technically constrained environments, without materially deviating from the claimed technical effect.

### 5.8 OEM Telemetry Verification Layers

In a more advanced embodiment, the system enforces a three-tier verification framework for telemetry access. Each layer enhances protection against unauthorized replication, platform simulation, or system bypass:
VIN-based Authentication: The system verifies the Vehicle Identification Number (VIN) of the target vehicle and matches it against a cryptographically signed internal whitelist maintained by the central key infrastructure. The authentication result is timestamped, digitally signed, and hashed to prevent replay attacks.

Firmware-Level Handshake: The vehicle's onboard computing platform initiates a secure boot process and generates a temporary session token using hardware-protected cryptographic modules such as TPM (Trusted Platform Module) or HSM (Hardware Security Module). This token is used to authorize short-lived telemetry sessions.

Manufacturer-Certified API Use: All telemetry endpoints must be provided by the vehicle's OEM and require mutual TLS authentication or digital signature validation at runtime. Only verified API clients may interact with these endpoints, ensuring integrity and authenticity at the data layer.

This implementation guarantees that only certified system instances are allowed to interact with vehicle telemetry. Any unauthorized access attempt, whether partial or complete, is automatically rejected and logged as a tamper-evident, non-executable event. These logs support auditability, regulatory compliance, and forensic investigation in the event of misuse.

### 5.9 Region-Specific Machine Learning Adaptation

In one embodiment, the system's decision engine incorporates a machine learning model configured to dynamically adapt its input weighting and decision thresholds based on region-specific driving behavior and contextual parking patterns, as described in Claim 2.

The machine learning functionality enhances accuracy by enabling the system to learn from historical session data, including successful transactions, user feedback, and edge-case fallbacks. The following mechanisms are used:

### Localized Model Weighting

The system collects anonymized training data from operational parking events within defined deployment regions (e.g., Tokyo, Paris, or California). Weighting coefficients within the decision engine are dynamically adjusted to reflect localized behavior patterns, such as:
- average idle duration before vehicle shutdown;
- frequency of short stops (e.g., deliveries or pickups);
- driver responsiveness in dense urban zones versus rural environments.

For example, in urban Tokyo, vehicles may idle for less than 8 seconds before a parking-like stop is initiated, reflecting high traffic flow and space constraints. In contrast, in suburban California, idle durations often exceed 20 seconds before intentional parking. These behavioral differences are encoded into the model to improve prediction relevance and session decision fidelity.

### Geo-Behavioral Modifiers

The model applies region-specific behavioral modifiers based on data such as:
- infrastructure density (e.g., high-rise urban zones vs. open parking lots);
- known regulatory differences (e.g., parking limits, peak hours);
- user interaction patterns or exceptions (e.g., frequent short stops near convenience stores in Japan).

These modifiers are applied as conditional layers within the scoring algorithm, adjusting activation or suppression probabilities in real time.

### Versioned Regional Models and Audit Interface

Each region-specific model is maintained as an independent, version-controlled instance with its own:
- training log and dataset lineage;
- validation metrics;
- hash-based model identifier.

These models are stored securely and are auditable via the secure audit trail described in Claim 1(f), and the machine learning logging features of Claim 2. In accordance with Claim 2(c), each model is retrained either:
- on a scheduled interval (e.g., weekly); or
- upon detecting a performance deviation threshold (e.g., >5% change in decision accuracy).

Fallback-influenced events and override scenarios are explicitly excluded from the training pipeline to maintain clean learning baselines, as required by Claim 2(b). The system ensures that only validated and jurisdiction-approved models are deployed in production environments. Cross-regional retraining is disallowed unless audit-verified and jurisdictionally compliant.

### Technical Effect

This region-specific machine learning architecture improves decision accuracy by aligning scoring behavior with local norms. It reduces false positives and negatives, increases user trust, and supports regulatory adaptability by ensuring contextual compliance. This technical approach distinguishes the system from static, rule-based implementations and enables adaptive optimization across geographically diverse environments.

This implementation directly supports the adaptive weighting mechanisms, audit-controlled learning lifecycle, and fallback data isolation procedures defined in Claim 2.5.10 Regulatory Compliance and Jurisdictional Enforcement Layer

In one embodiment, the system incorporates a regulatory compliance and enforcement layer that ensures verifiable adherence to regional and international standards related to data privacy, auditability, and operational transparency. This subsystem functions in parallel with the core transaction and logging mechanisms and supports real-time oversight and post-event verification.

5.10.1 GDPR Compliance (EU Regulation 2016/679) - All personal, location-based, and session-related data are encrypted both in transit and at rest. The system enforces strict purpose limitation and supports user-defined retention policies, implemented through metadata-bound expiration mechanisms. All processing activities are traceable and logged in a tamper-evident format, accessible only to authorized parties via role-based cryptographic authentication.

5.10.2 CCPA and Data Subject Rights (California Consumer Privacy Act) - The system provides full support for Data Subject Access Requests (DSAR), including the ability for users to view, export, and delete personal data related to parking sessions. Each access, transfer, or modification event is logged with a cryptographically verifiable timestamp and metadata trail, ensuring legal accountability and non-repudiation.

5.10.3 ISO/IEC 27001:2022 Logging and Security Controls - All telemetry interactions, decision evaluations, and configuration states are recorded in an append-only audit log protected by asymmetric cryptographic keys. System access to these logs is governed by multi-factor authentication and fine-grained role separation. Compliance with ISO/IEC 27001:2022 ensures secure, traceable, and auditable information management across deployment environments.

5.10.4 Jurisdictional Tagging and Third-Party Integration - Each audit log entry is tagged with jurisdiction-specific metadata identifying the regulatory framework under which it was generated. This enables automated filtering, rule enforcement, and audit trail segmentation. The system supports integration with external regulatory platforms, audit services, or certification entities for real-time inspection, forensic analysis, or legal dispute resolution, as described in Claims 22 and 25.

### Technical Effect:

This regulatory compliance architecture ensures lawful, auditable, and transparent system behavior across jurisdictions, while enabling secure integration with third-party oversight bodies. It guarantees that all autonomous session decisions are provable, traceable, and aligned with applicable legal frameworks. This subsystem forms an integral part of the system architecture described in Claim 25 and ensures that compliance-related functions are inseparably linked to session control, logging, and auditability.

### 5.10.5 Future-Proofing Through Modular Compliance Design

### Framework-Agnostic Compliance Support

To ensure forward compatibility with evolving legal frameworks and regional data protection requirements, the compliance integration layer described herein is implemented in a modular, standard-agnostic fashion.

Each core function-such as data encryption, retention enforcement, access auditing, and jurisdictional tagging-is abstracted via configurable policy modules. These modules allow administrators or deployment partners to update applicable legal rules (e.g., GDPR, CCPA, NIS2, or AI Act) without modifying the autonomous decision logic or underlying transaction architecture.

This flexibility ensures continued technical compliance and legal operability even in the event of regulatory changes, international divergence, or standard replacement. The framework-agnostic design extends the scope and longevity of the invention as described in Claim 25.

### 5.11 Freedom to Operate and Open Ecosystem Considerations

In some embodiments, the system may interoperate with or extend open-source or third-party software libraries for peripheral functionality, such as Bluetooth scanning modules, calendar access APIs, logging frameworks, or data serialization components.

To maintain full legal enforceability and commercial deployability, the core logic described in Claims 1 through 29-including the session control engine, fallback isolation, cryptographic transaction flow, and adaptive machine learning model-is implemented without reliance on copyleft-licensed or dependency-restricted components.

Where publicly available SDKs or system libraries are used (e.g., for proximity signal processing or mobile OS integration), these elements are limited to modular, replaceable components that do not affect the novelty, inventive step, or enforceability of the claimed invention.

This modular isolation ensures that the patent remains valid and enforceable regardless of open-source integration choices in downstream deployments, and that no licensing conflict impairs the freedom to operate commercially across jurisdictions or platforms.

### 5.12 Summary of Embodiment Architecture

The embodiments described in this section illustrate a cohesive system architecture that supports autonomous, cryptographically verifiable parking session control based on multi-source input fusion, adaptive decision logic, and jurisdictional compliance integration.

Each subsystem - including fallback isolation, machine learning adaptation, OEM telemetry verification, secure audit logging, and transaction execution - is implemented in alignment with the legal, operational, and technical requirements defined across Claims 1 through 9.

The design prioritizes modularity, real-world interoperability, and forward compatibility with evolving regulatory and technological ecosystems.

As such, the invention demonstrates not only inventive step and industrial applicability, but also a robust foundation for long-term deployment, cross-platform integration, and strategic enforcement in global markets.

### 8. Description of Drawings

The invention will now be further illustrated by reference to the accompanying figures. These figures are provided for illustrative purposes only and are not intended to limit the scope of the claims. The figures are presented in a logical execution order, beginning with the system overview and proceeding through decision logic, transaction execution, fallback handling, deployment models, scoring mechanism, batch planning, and audit logging.

Figures 1-4 in particular are intended to support the structural and functional details of Claim 1 and its dependent claims.

### Figure 1 - System Architecture Overview

This figure illustrates the core components of the autonomous parking session control system, including contextual input modules (100-106), decision logic (108), session control (110), transaction handling (112), fallback (114), secure logging (116), and interaction with external systems (118). The decision logic module (108) interacts with input modules and forwards validated control decisions to module (110).

Supports Claims: 1 (system architecture), 4 (fallback), and 6 (software execution).

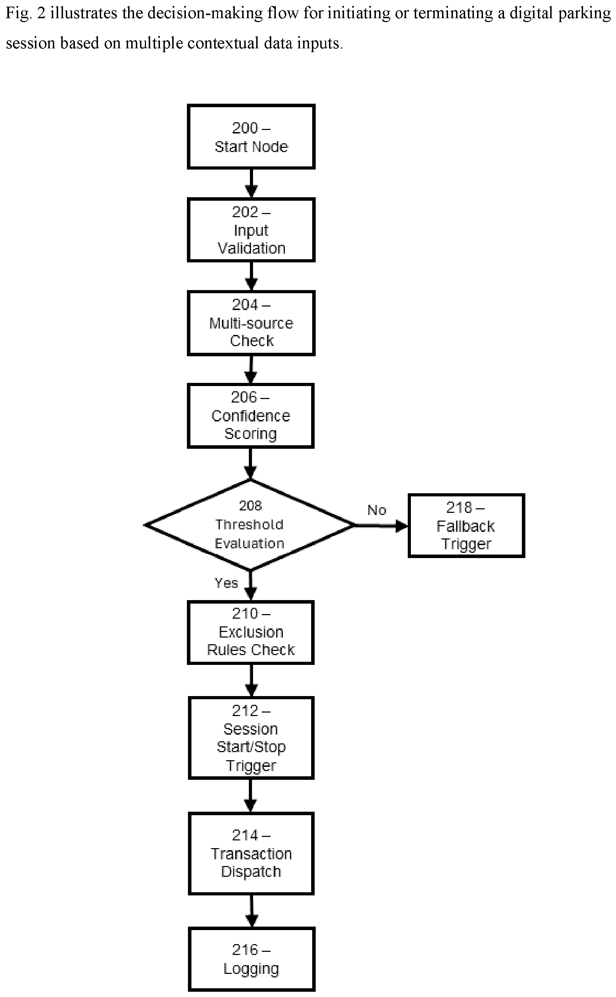

### Figure 2 - Decision-Making Flow for Parking Sessions

This flowchart illustrates the decision logic: starting from node (200) through input validation (202), multi-source check (204), scoring (206), threshold check (208), exclusion logic (210), and final instruction (212). It ends with transaction dispatch (214), logging (216), and fallback trigger (218).

Supports Claims: 1 (multi-input logic), 2 (confidence scoring and ML tuning), 4 (fallback handling).

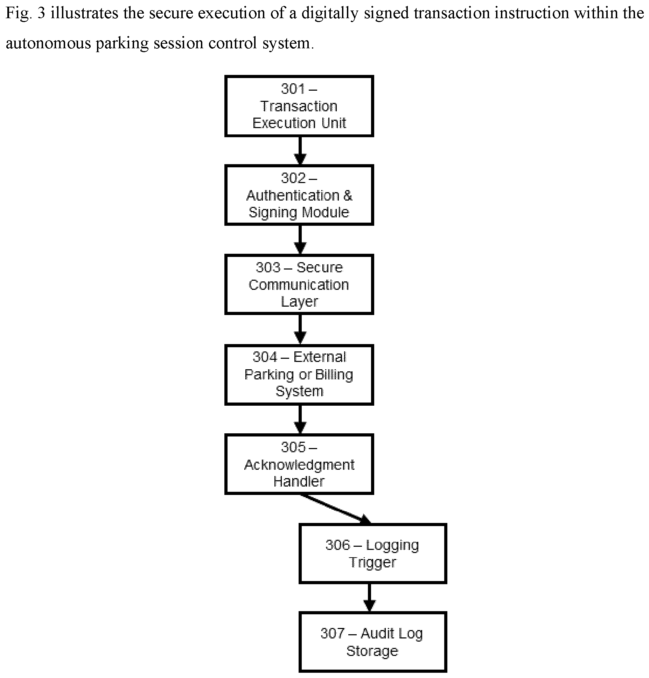

### Figure 3 - Transaction Execution Schema

This diagram depicts how the system generates and transmits secure session instructions via transaction execution unit (301), signing module (302), encrypted interface (303), and external platform (304). Logging occurs through acknowledgment (305), log trigger (306), and audit storage (307).

Supports Claims: 1 (execution path), 3 (cryptographic signature), and 6 (software implementation).

### Figure 4 - Fallback and Override Control Logic

This figure shows the separation of fallback logic: override invocation (401), active module check (402), fallback trigger (403), execution (404), logging (405), and alternative instruction (406).

Supports Claims: 4 (fallback logic), 2(b) (ML training exclusion), and 9 (security traceability).

### Figure 5 - Deployment Scenarios Overview

The system is shown operating across multiple environments: mobile (502), in-vehicle (503), cloud-based (504), and hybrid (506), all linked to the control engine (501) via gateway (505) and executed by session node (507).

Supports Claims: 5 (deployment flexibility), 6(g) (software execution contexts).

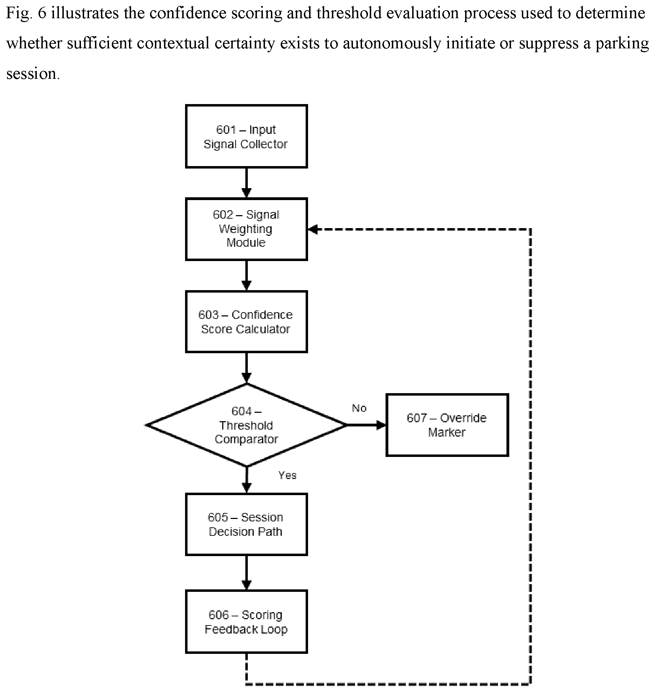

### Figure 6 - Confidence Scoring and Threshold Evaluation

This diagram shows the scoring pipeline: signal collection (601), weighting (602), score calculation (603), threshold comparison (604), decision path (605), feedback loop (606), and override marker (607).

Supports Claims: 2 (ML-based adaptation), 1(b) (threshold decision logic), and 4 (override flagging).

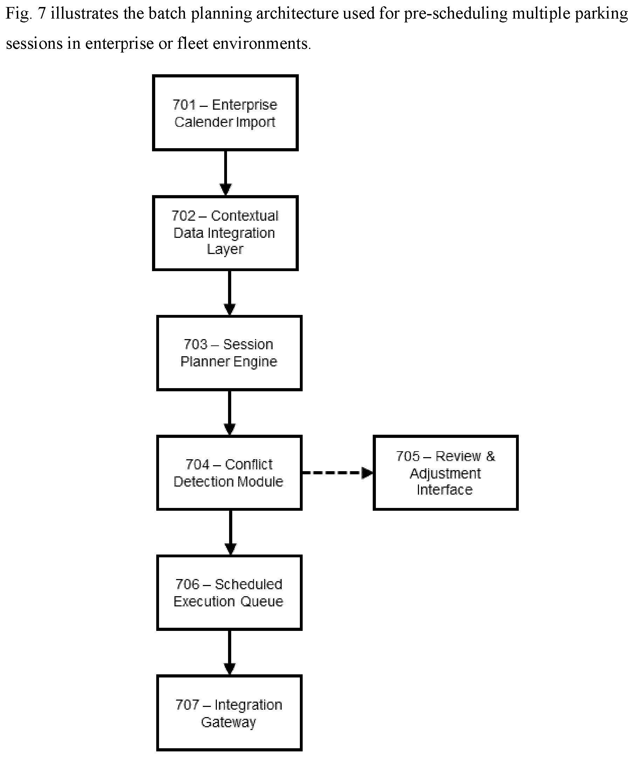

### Figure 7 - Batch Session Planning (Enterprise Use)

This scenario includes: calendar import (701), data enrichment (702), planning engine (703), conflict detection (704), review interface (705), execution queue (706), and dispatch gateway (707).

Supports Claims: 7(a) (fleet integration), 2(c) (predictive planning), and 6 (software execution).

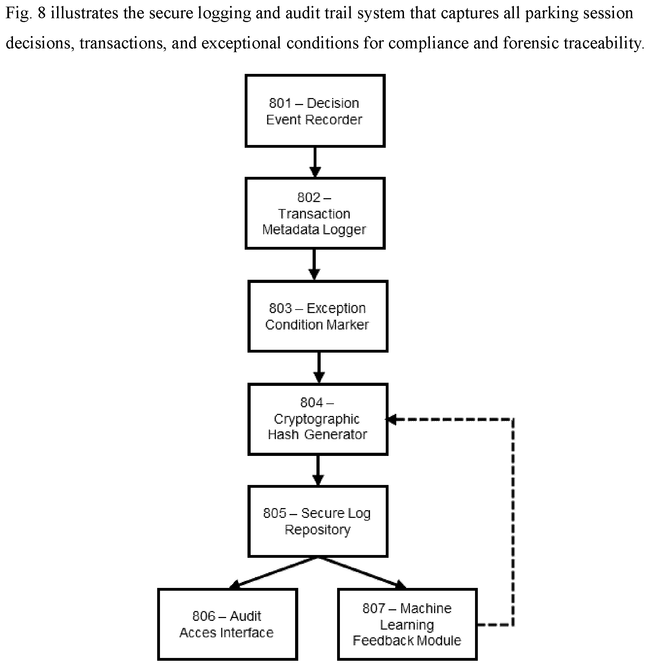

### Figure 8 - Logging and Audit Trail with Cryptographic Safeguards

This figure depicts: event recorder (801), metadata logger (802), fallback marker (803), hash generator (804), audit storage (805), access interface (806), and ML feedback (807).

Supports Claims: 1(f) (audit trail), 8 (compliance), and 2(e) (training feedback via logs).

Figure 1 illustrates the core components of the autonomous parking session management system. The numbered elements represent the following modules and interfaces:
100 - Location Input Module
   Receives geolocation data from satellite-based positioning systems, including GPS, GNSS, or hybrid localization engines. Used to determine whether the vehicle is situated within a recognized parking zone.
102 - Scheduling Input Module
   Captures user or system-defined scheduling data, including calendar entries, fleet coordination rules, or predefined exception windows, to assess time-based exclusion conditions.
104 - Vehicle Input Module
   Retrieves real-time vehicle telemetry from internal systems such as OBD or CAN bus, including engine status, gear selection, motion detection, or ignition events.
106 - Proximity Input Module
   Monitors local wireless signals such as Bluetooth, Wi-Fi, or smart key proximity to detect physical presence near the vehicle in cases where geolocation may be degraded or ambiguous.
108 - Decision Logic Module
   Processes all active input signals and computes an aggregate confidence score using a threshold-weighted model. Determines whether a parking session should be initiated or terminated.
110 - Session Control Module
   Issues a binary session control instruction ("start" or "stop") based on the outcome of the decision logic. Operates autonomously without user confirmation under standard conditions.
112 - Transaction Interface
   Transmits the binary instruction to external platforms using secure communication protocols or APIs, enabling interaction with billing or enforcement systems.
114 - Fallback Module
   A technically isolated component that activates only under explicitly defined exception conditions, such as insufficient data availability or conflicting inputs. Does not participate in standard decision logic.
116 - Secure Logging Module
   Records input data, confidence scores, decision events, and transaction details in an immutable, cryptographically verifiable audit trail for compliance and post-event verification.
118 - External Systems
   Third-party platforms, such as municipal parking infrastructures, billing providers, or enforcement authorities, which receive, validate, and process the transmitted parking session instructions.

Figure 2 illustrates the sequential logic used by the decision engine to determine whether a digital parking session should be initiated or terminated. The flow operates in real time and evaluates contextual inputs against technical criteria. Numbered elements represent the following functional stages:
200 - Start Node
   Logical entry point where incoming contextual data from multiple input modules is received for evaluation.
202 - Input Validation Module
   Performs integrity and freshness checks on each received input signal, including verification of timestamps, source trust level, and signal completeness.
204 - Multi-source Availability Check
   Determines whether at least two independent and validated input signals are available for further processing. If not, the flow may divert to fallback handling.
206 - Confidence Scoring Component
   Applies a configurable weighting algorithm to the validated input signals and computes an aggregate confidence score based on input reliability and contextual relevance.
208 - Threshold Evaluation Node
   Compares the aggregate confidence score to a predefined execution threshold. If the threshold is not met, the decision process halts.
210 - Exclusion Rules Evaluation
   Checks for active exclusion conditions based on calendar constraints, user-defined whitelists, or system policies that may suppress session activation.
212 - Session Trigger Generator
   If the threshold condition is met and no exclusions are triggered, this component generates a binary session control instruction (start or stop).
214 - Transaction Dispatch Module
   Transmits the session instruction to an external platform such as a billing provider or enforcement system via a secure and authenticated communication interface.
216 - Audit Logging Module
   Records the evaluated inputs, confidence scores, exclusion outcomes, and issued instruction into a cryptographically secure audit trail.
218 - Fallback Trigger Node
   Activated if the minimum input or scoring conditions are not met. In such cases, the system either remains inactive or flags the event as a fallback instance, without executing a session command.

Figure 3 illustrates the functional components involved in securely transmitting a parking session instruction from the control system to an external platform. The process includes generation, authentication, transmission, acknowledgment, and logging. The numbered elements are described as follows:
301 - Transaction Execution Unit
   Initiates the construction of a parking session instruction-either initiation or termination-based on the output received from the session control module.
302 - Authentication and Signing Module
   Digitally signs the session instruction using a cryptographic key associated with the system identity. Optionally verifies local credentials or platform certificates prior to dispatch.
303 - Secure Communication Layer
   Establishes an encrypted transmission channel using secure protocols (e.g., HTTPS, TLS, or message queuing) to transmit the signed instruction to an external endpoint.
304 - External Parking or Billing System
   Third-party infrastructure operated by a municipal authority or private provider, configured to receive and process session instructions for billing, validation, or enforcement purposes.
305 - Acknowledgment Handler
   Listens for response signals from the external system to confirm receipt, processing outcome, or rejection of the transmitted session instruction.
306 - Logging Trigger
   Activates the system's logging mechanism upon instruction dispatch or acknowledgment reception, ensuring that the transaction and related metadata are preserved.
307 - Audit Log Storage
   Stores the complete transaction package-including instruction content, timestamp, acknowledgment, and cryptographic signature-in a tamper-evident, verifiable audit repository for future reference, dispute resolution, or regulatory compliance.

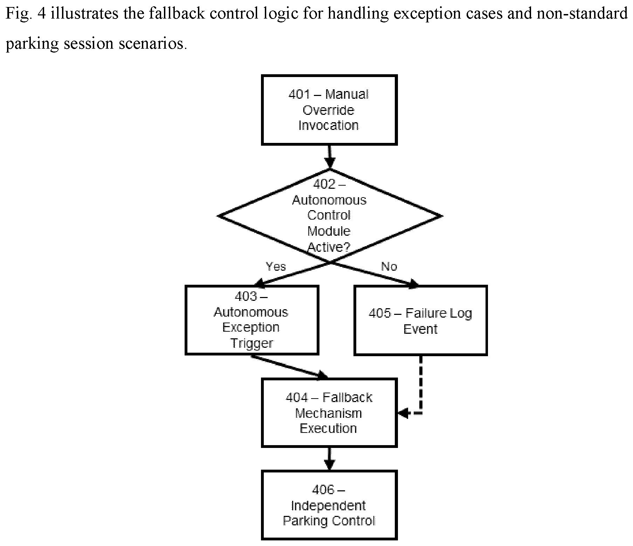

Figure 4 illustrates the logic structure associated with fallback handling and manual override mechanisms. These mechanisms operate independently from the standard autonomous session control loop and are only triggered under specific exception conditions. Numbered elements are as follows:
401 - Manual Override Invocation
   Entry node activated by a user interaction or an external system trigger, indicating that normal autonomous execution is to be temporarily bypassed.
402 - Autonomous Control Module Active?
   Decision checkpoint that evaluates whether the autonomous control logic is currently operational and has not been disabled or suppressed due to system error or policy configuration.
403 - Autonomous Exception Trigger
   Logic block that monitors for exceptional conditions, such as conflicting input signals, input unavailability, or violation of operational confidence thresholds. May also respond to user-defined exceptions.
404 - Fallback Mechanism Execution
   Initiates an alternative processing path using preconfigured fallback instructions. This branch may include session suppression, delayed activation, user notification, or temporary policy overrides.
405 - Failure Log Event
   Generates an audit entry recording the reason for bypassing autonomous execution, including contextual metadata such as timestamp, trigger source, and system status.
406 - Independent Parking Control
   Executes a parking session transaction based solely on the fallback decision, independently of the primary decision logic. The resulting instruction is marked accordingly in the audit trail.

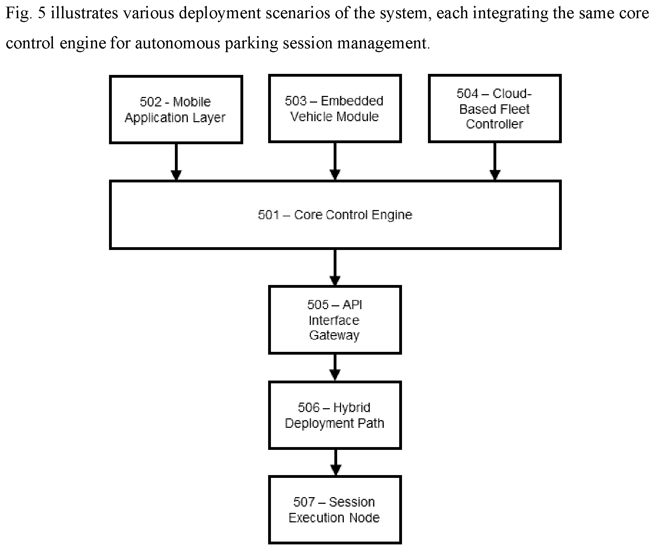

Figure 5 illustrates multiple deployment configurations for the autonomous parking session management system. Each variant maintains the same core functional logic while adapting to different execution environments. Numbered elements are defined as follows:
501 - Core Control Engine
   The centralized logic module responsible for evaluating contextual inputs and generating binary parking session instructions. This engine can operate locally or in a remote cloud environment.
502 - Mobile Application Layer
   A client-side interface operating on smartphones or tablets. This module integrates local sensors (e.g., GPS, Bluetooth), accesses scheduling data (e.g., calendar), and communicates with the control engine either directly or via backend relay.
503 - Embedded Vehicle Module
   An in-vehicle component integrated within the vehicle's software stack, capable of accessing onboard telemetry and executing parking session logic either autonomously or in coordination with remote services.
504 - Cloud-Based Fleet Controller
   A server-side platform that manages decision logic and transaction execution across multiple vehicles or users. Supports batch scheduling, policy enforcement, and centralized logging for fleet operations.
505 - API Interface Gateway
   Secure communication interface that exposes standardized endpoints for external systems to retrieve input data or receive session status, enabling integration with enforcement, billing, or infrastructure platforms.
506 - Hybrid Deployment Path
   A distributed architecture in which local devices perform input filtering and pre-processing, while the final decision and transaction execution are handled by remote cloud services. Balances latency, scalability, and policy control.
507 - Session Execution Node
   Responsible for transmitting the digitally signed binary session instruction to an external billing, enforcement, or registry platform. Operates as the endpoint of the control flow in all deployment variants.

Figure 6 illustrates the internal evaluation logic used to determine whether the input conditions are sufficient to trigger a parking session instruction. The diagram focuses on the computation and interpretation of confidence scores based on multiple weighted input signals. The numbered components are defined as follows:
601 - Input Signal Collector
   Aggregates validated real-time data from at least two independent contextual sources, including geolocation, scheduling, vehicle telemetry, and wireless proximity.
602 - Signal Weighting Module
   Applies dynamic weights to each input signal based on source reliability, historical accuracy, signal age, or contextual factors. Weighting may be updated through policy or learning models.
603 - Confidence Score Calculator
   Combines the weighted input values into a unified numerical confidence score representing the overall system certainty that parking should begin or end.
604 - Threshold Comparator
   Compares the computed confidence score to a dynamic or predefined execution threshold. Determines whether the score is sufficient to justify autonomous control activation.
605 - Session Decision Path
   Executes or suppresses the binary control instruction depending on the outcome of the threshold comparison. May forward the instruction to the session control module.
606 - Scoring Feedback Loop
   Logs scoring inputs and decision outcomes for the purpose of adaptive system tuning. May be connected to a machine learning model for future adjustment of input weights or rules.
607 - Override Marker (Optional)
   Flags confidence scores that have been influenced by manual override, fallback activation, or policy-based suppression. These scores are logically isolated and excluded from training or standard audit interpretation. This module may be omitted in variants where override conditions are not recorded or evaluated for learning purposes.

Figure 7 illustrates a scheduling-based subsystem used to preconfigure parking session instructions in enterprise or fleet scenarios. The process involves importing structured calendar data, transforming it into session commands, and queuing these instructions for autonomous future execution. The numbered components are described as follows:
701 - Enterprise Calendar Import Module
   Connects to external scheduling platforms such as fleet software, CRM systems, or calendar services to import planned trips, appointments, or delivery events.
702 - Contextual Data Integration Layer
   Enhances imported entries with contextual attributes including geographic coordinates, parking zone metadata, estimated durations, and event-based constraints.
703 - Session Planner Engine
   Processes the enriched schedule data to generate one or more parking session instructions, each tied to a specific time and location. These instructions follow the same binary control format as live sessions.
704 - Conflict Detection Module
   Validates the planned sessions to detect logical errors such as overlapping instructions, invalid parking zones, or actions outside permitted times. Conflicts may be flagged for resolution.
705 - Review and Adjustment Interface (Optional)
   Interface that allows authorized users (e.g., fleet managers) to manually review, approve, or modify the planned sessions before they are committed to the execution queue. This interface is logically separate from the autonomous control logic.
706 - Scheduled Execution Queue
   Stores approved session instructions along with their associated timestamps and triggers. Sessions in the queue are autonomously activated at the scheduled time without user confirmation.
707 - Integration Gateway
   Serves as the communication interface between the scheduled execution queue and the core control engine. Uses standard APIs to dispatch session instructions for signing, transmission, and logging.

Figure 8 illustrates the components involved in the logging and audit subsystem of the autonomous parking session management system. This architecture is designed to ensure data integrity, traceability, and long-term verifiability of all control decisions and transactions. The numbered elements are defined as follows:
801 - Decision Event Recorder
   Captures every session control event, including whether a start or stop instruction was issued, the associated confidence score, and contributing input signals.
802 - Transaction Metadata Logger
   Records essential metadata such as timestamp of execution, session identifier, decision path, and the external endpoint to which the instruction was sent.
803 - Exception Condition Marker
   Flags log entries that were influenced by fallback activation, manual override, or anomaly detection. These entries are tagged and logically separated from standard decision events.
804 - Cryptographic Hash Generator
   Applies a one-way cryptographic hash function to each log entry, producing a tamper-evident signature that binds the content to its origin and timestamp.
805 - Secure Log Repository
   Stores all signed log entries in an append-only, tamper-resistant ledger that enables long-term record retention in compliance with regulatory or contractual requirements.
806 - Audit Access Interface
   Provides read-only access to authorized parties such as regulatory agencies, legal auditors, or dispute resolution systems. Allows retrieval and verification of records without enabling modification.
807 - Machine Learning Feedback Module (Optional)
   Analyzes historical log data to detect patterns in scoring outcomes, false positives, or exceptional triggers. May adjust internal weighting parameters or threshold settings to improve decision performance over time.

## Claims

1. - A computer-implemented system for autonomously initiating and terminating digital parking sessions, comprising:
(a) at least two independent contextual input modules providing real-time data selected from geolocation, vehicle telemetry, wireless proximity, or scheduling metadata;
(b) a decision logic module configured to compute a confidence score based on the inputs, and to issue a binary session instruction (start or stop) when a predefined threshold is met and no exclusion rule applies;
(c) a session control module operatively connected to the decision logic, configured to transmit the session instruction.

2. - The system of Claim 1, wherein each input module assigns a reliability score between 0 and 1, and the confidence score is computed using a weighted model requiring at least two inputs to exceed a reliability of 0.7.

3. - The system of Claim 1, wherein exclusion rules comprise:
• conflicting input signals;
• duplicate active sessions for the same vehicle;
• or invalid, stale, or missing data points.

4. - The system of Claim 1, further comprising a secure audit trail module that:
(a) records input data, decisions, and session instructions in a tamper-evident and cryptographically verifiable format;
(b) is configured to export session metadata in real time to external enforcement systems or audit platforms via a standardized, read-only API interface;
(c) supports the inclusion of manual override justifications, wherein each override event is logged with a justification code or free-text reason cryptographically bound to the session record.

5. - The system of Claim 1, further comprising a fallback module that is logically segregated from the decision logic and is activated only under defined exception triggers.

6. - The system of Claim 1, wherein the session instruction is digitally signed using ECDSA-P256 and transmitted via a TLS 1.3 REST API to an external enforcement or billing platform.

7. - The system of claim 1, further comprising a machine learning engine configured to:
(a) dynamically adjust input weightings based on:
• historical parking session outcomes;
• source reliability trends;
• predefined error thresholds;
(b) exclude from retraining:
• sessions where fallback was triggered;
• sessions marked as anomalous by audit trail;
(c) retrain the model:
• periodically; or
• upon deviation from accuracy thresholds;
(d) support regional calibration using:
• local behavioral datasets;
• urban mobility profiles;
(e) log version control, retraining events, and model performance in the secure audit trail.

8. - The system of claim 1, wherein the transaction execution unit and decision logic module are cryptographically bound, such that:
(a) each instruction includes:
• timestamp;
• cryptographic signature;
• API response code;
• user confirmation flag;
(b) instruction atomicity and non-repudiation are enforced by validating:
• signature integrity;
• session linkage;
• execution success.

9. - The system of claim 1, wherein the fallback module is configured to:
(a) suppress autonomous execution if:
• conflicting inputs are present;
• input reliability is below threshold;
• a user override is active;
(b) log fallback sessions separately, including:
• trigger type;
• suppressed actions;
• associated context;
(c) assign a fallback integrity flag;
(d) exclude flagged sessions from machine learning retraining.

10. - The system of claim 1, wherein the architecture supports deployment on:
(a) a mobile application (Android or iOS) with cloud verification;
(b) an embedded vehicle platform (e.g., IVI or telematics unit);
(c) a cloud-based control engine managing multiple clients;
(d) a decentralized edge-based architecture with encrypted peer-to-peer audit synchronization.

11. - A computer program product stored on a non-transitory computer-readable medium, comprising instructions to:
(a) collect real-time data from at least two input sources as defined in claim 1;
(b) compute an aggregate confidence score and evaluate it against a predefined threshold;
(c) issue a session instruction if conditions are met;
(d) activate fallback logic under defined exceptions;
(e) generate a digitally signed transaction over a secure TLS 1.3 REST API;
(f) write decision and audit data to a secure, tamper-evident log;
(g) execute on mobile, embedded, or cloud-based systems.

12. - The system of Claim 1, configured for use in:
(a) a fleet management platform enabling automated session execution per vehicle;
(b) a public parking infrastructure network synchronizing with enforcement APIs;
(c) a vehicle-sharing system with user attribution and access-based billing;
(d) a central dashboard for administrator control, audit inspection, override governance, and real-time monitoring of session anomalies, fallback triggers, and unresolved events, including filter options by jurisdiction, time, and input type..

13. - The system of claim 1, further comprising a compliance module configured to:
(a) enforce data protection policies according to:
• GDPR;
• CCPA;
• other jurisdictional rules;
(b) dynamically modify session behavior per regional laws;
(c) trigger system adjustments based on:
• country-level;
• city-level constraints;
(d) log all compliance actions and overrides for audit verification.

14. - The system of claim 1, wherein session control is gated by:
(a) authenticated access to vehicle telemetry via VIN-based key exchange;
(b) firmware-level token generation with boot-time validation;
(c) certified manufacturer-issued API calls, digitally signed and verified; and wherein:
(d) any unauthorized or spoofed access is blocked;
(e) such attempts are logged as tamper-evident, non-executable audit records to support compliance enforcement and liability tracing.

15. - A method for controlling digital parking sessions based on minimal signal fusion logic, comprising:
(a) evaluating at least two concurrent contextual signals selected from the group consisting of:
• geolocation;
• vehicle telemetry;
• wireless proximity;
• scheduling metadata;
(b) issuing a binary parking session instruction (start or stop) without requiring manual user confirmation, provided that a predefined confidence condition is met;
(c) recording the instruction, associated input signals, and decision outcome in a secure, tamper-evident log;
(d) ensuring that any manual user override, if available, is logically and cryptographically segregated from the core instruction processing path, and flagged separately for audit purposes;
(e) operating without activation of fallback or override mechanisms under standard conditions, such that all session decisions are made autonomously;
(f) embedding in each session instruction a timestamp, unique identifier, and cryptographically verifiable signature in lieu of a persistent audit trail.

16. - The system of Claim 1, wherein the decision logic is further constrained by a predefined temporal policy, such that session control instructions are only issued during authorized time windows derived from calendar metadata or administrator-defined policy rules.

17. - The system of Claim 1, further comprising a post-session correction interface, enabling authenticated users to submit session correction requests specifying adjusted start or stop times, wherein each request is recorded with a timestamp, user identifier, and linked justification, and is stored as an immutable, versioned audit record.
